(19) Europäisches Patentamt
European Patent Office
Office européen des brevets

(11) Veröffentlichungsnummer : **0 424 640 B1**

(12) # EUROPÄISCHE PATENTSCHRIFT

(45) Veröffentlichungstag der Patentschrift : **29.09.93 Patentblatt 93/39**

(51) Int. Cl.$^5$ : **C08G 69/28,** C08G 69/32, C08G 69/42

(21) Anmeldenummer : **90116612.4**

(22) Anmeldetag : **30.08.90**

(54) **Verfahren zur Herstellung eines thermoplastisch verarbeitbaren, aromatischen Polyamids.**

(30) Priorität : **25.10.89 DE 3935466**

(43) Veröffentlichungstag der Anmeldung : **02.05.91 Patentblatt 91/18**

(45) Bekanntmachung des Hinweises auf die Patenterteilung : **29.09.93 Patentblatt 93/39**

(84) Benannte Vertragsstaaten : **AT BE CH DE FR GB IT LI NL**

(56) Entgegenhaltungen :
**EP-A- 0 237 722**
**DE-A- 3 539 846**
**PATENT ABSTRACTS OF JAPAN Bnd. 11, Nr. 85 (C-410) 14. März 1987, & JP-A-61 236827**

(73) Patentinhaber : **HÜLS AKTIENGESELLSCHAFT**
**D-45764 Marl (DE)**

(72) Erfinder : **Poll, Günter, Dr.**
**Venusweg 9**
**D-4370 Marl (DE)**
Erfinder : **Bartmann, Martin, Dr.**
**Elper Weg 64**
**D-4350 Recklinghausen (DE)**
Erfinder : **Finke, Jürgen, Dr.**
**Münsterlandstrasse 22**
**D-4370 Marl (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Gegenstand der Erfindung ist ein Verfahren zur Herstellung eines thermoplastisch verarbeitbaren, aromatischen Polyamids durch Polykondensieren nachstehender Ausgangsmonomeren:

A. HOOC - Ar - COOH

B. $H_2N$ - Ar' - $NH_2$

hierbei bedeutet

Ar: 1.3- oder 1.4-Phenylen; 1.4-, 1.5-, 2.6- oder 2.7- Naphthylen,

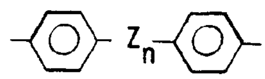

oder

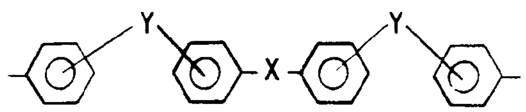 ;

Ar':

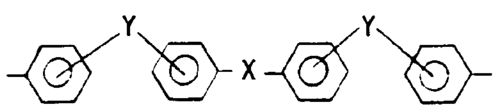 ;

X: $-SO_2-$; -CO-;

Y: -O-; -S-;

Z: -O-; -S-; $-SO_2-$; -CO-; $-CR_2-$;

R: -H; $C_1$ - $C_4$-Alkyl;

n: 0; 1;

in der Schmelze in Gegenwart eines Katalysators bei Temperaturen im Bereich von 200 bis 400 °C.

Die Herstellung solcher Polyamide ist grundsätzlich bekannt (DE-OS 36 09 011). Die Schmelzviskosität dieser aromatischen Polyamide ist allerdings hoch. Daher sind bei ihrer Herstellung und Verarbeitung sehr hohe Temperaturen erforderlich - im allgemeinen min destens 350 °C. Bei diesen Temperaturen wird häufig eine Schädigung des Produkts beobachtet, erkennbar an Verfärbungen oder einer Verschlechterung der mechanischen Eigenschaften.

Aufgabe der Erfindung war es, formmassen auf Basis aromatischer Polyamide zur Verfügung zu stellen, die die geschilderten Nachteile der Produkte des Standes der Technik nicht aufweisen.

Diese Aufgabe wurde dadurch gelöst, daß die Reaktion in Gegenwart von Phosphor- und Zinn(II)-Verbindungen als Katalysator stattfindet, wobei der Gehalt an Phosphor- und Zinn(II)-Verbindung 0,05 bis 4 Mol.-% beträgt und die Phosphorverbindung mindestens zu 0,025 Mol.-% und die Zinn(II)-Verbindung mindestens zu 0,025 Mol.-% - jeweils bezogen auf die Summe der Komponenten A. und B. - eingesetzt wird.

Als Phosphorverbindungen kommen in erster Linie Triphenylphosphit und Säuren der allgemeinen Formel $H_3PO_m$ mit m = 2 bis 4 in Frage. Geeignete vom Phosphor abgeleitete Säuren sind hypophosphorige Säure, phosphorige Säure, Phosphorsäure.

Als Zinn(II)-Verbindungen werden z. B. Salze von organischen Mono- und/oder Dicarbonsäuren mit 2 bis 16 C-Atomen im Kohlenstoffgerüst eingesetzt. Hierzu zählen u. a. Zinn(II)dioctanoat, Zinn(II)dilaurat, Zinn(II)dodecandioat, Zinn(II)oxalat.

Eine andere erfindungsgemäße Gruppe von Zinn(II)-Verbindungen sind Zinnalkoholate.

Vertreter dieser Gruppe von Verbindungen sind z. B. Zinn(II)glykolat, Zinn(II)dimethylat oder Zinn(II)diethylat.

Anstelle von physikalischen Mischungen können auch Verbindungen eingesetzt werden, die sowohl Phosphor als auch Zinn(II) enthalten. Vertreter dieser Klasse sind z. B. Zinn(II)-Salze der vom Phosphor abgeleiteten Säure der allgemeinen Formel $H_3PO_m$ mit m = 2 bis 4.

Ferner kommen Verbindungen in der allgemeinen Formel

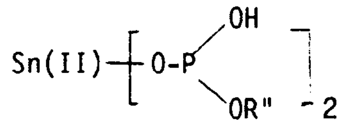

in Frage, wobei R"
Methyl, Ethyl, Butyl oder 2-Ethylhexyl bedeutet.

Bevorzugt werden solche Verbindungen, in denen R" einen Methyl- oder 2-Ethylhexylrest darstellt.

Das Katalysatorgemisch aus Phosphor- und Zinn(II)-Verbindungen ist zu 0,05 bis 4 Mol.-%, vorzugsweise zu 0,2 bis 2 Mol.-%, - bezogen auf die Komponenten A. und B. - in der Reaktionsmischung enthalten. Das molare Verhältnis der Phosphor- und Zinn(II)-Verbindungen zueinander ist grundsätzlich frei wählbar. Es ist jedoch zu beachten, daß die Phosphorverbindung zumindest zu 0,025 Mol.-% und die Zinn(II)-Verbindung zumindest zu 0,025 Mol.-% - jeweils bezogen auf die Summe der Komponenten A. und B. - im Reaktionsgemisch enthalten sind.

Als aromatische Dicarbonsäuren (Komponente A.) kommen Isophthalsäure, Terephthalsäure, 1.4-, 1.5-, 2.6-, 2.7-Naphthalindicarbonsäure, 4.4'-Diphenyletherdicarbonsäure oder 4.4'-Benzophenondicarbonsäure, 4.4'-Diphenylsulfondicarbonsäure, 2-Phenoxy-terephthalsäure, 4.4'-Biphenyldicarbonsäure oder Gemische davon in Frage.

Bevorzugt als Komponente A. wird Isophthalsäure allein oder ein Gemisch von Isophthalsäure mit einer der weiteren oben genannten Säuren eingesetzt. Im letzteren Fall werden bis zu 45 Mol-% Isophthalsäure ersetzt.

Als aromatische Diamine (Komponente B.) kommen z. B. 4.4'-Bis(4-aminophenoxy)diphenylsulfon,4.4'-Bis(3-aminophenoxy)diphenylsulfon, 4.4'-Bis(4-aminophenoxy)benzophenon, 4.4'-Bis(3-aminophenoxy)benzophenon, 4.4'-Bis(p-aminophenylmercapto)benzophenon, 4.4'-Bis(p-aminophenylmercapto)diphenylsulfon oder Gemische davon in Frage.

Bevorzugt wird 4.4'-Bis(4-aminophenoxi)diphenylsulfon verwendet.

Das molare Einsatzverhältnis der Komponenten A. und B. bewegt sich im Bereich von etwa 1 : 1.

Die Glastemperatur ($T_g$) der erfindungsgemäßen Polyamide liegt im Bereich von 190 bis 270 °C, die Viskositätszahlen (J-Werte) bei etwa 30 bis 100 $cm^3/g$; bevorzugt bei 60 bis 80 $cm^3/g$.

Um eine verbesserte Hydrolysebeständigkeit der Polyamide zu erreichen, können den erfindungsgemäßen Produkten noch 0,01 bis 10 Mol-% - bezogen auf die Summe der Komponenten A. und B. - eines niedermolekularen aliphatischen, araliphatischen oder aromatischen Carbonsäureamids zugesetzt werden. Hierbei kann der aromatische Rest durch Halogen oder durch $C_1$- bis $C_4$-Alkylreste substituiert sein. Diese Maßnahme wird in DE-OS 38 04 401 beschrieben.

Die Herstellung der aromatischen Polyamide ist grundsätzlich bekannt. Sie wird u. a. in DE-OS 36 09 011 beschrieben.

Eine bevorzugte Arbeitsweise bei der Herstellung der aromatischen Polyamide ist es, neben dem Katalysatorgemisch noch Dialkylaminopyridine als Cokatalysator einzusetzen.

Besonders geeignete Dialkylaminopyridine sind solche mit 1 bis 10 C-Atomen in der Alkylgruppe. Bevorzugt verwendet werden 4-Dimethylaminopyridin, 4-Dibutylaminopyridin, 4-Piperidinylpyridin, die gegebenenfalls zusammen mit dem Aminostickstoff einen Pyrrolidin oder Piperidinring bilden können.

Sofern ein Cokatalysator benutzt wird, wird er in einer Menge von 0,05 bis 4 Mol-%, vorzugsweise von 0,2 bis 2 Mol-% - bezogen auf die Summe der Komponenten A. und B. - eingesetzt. In besonders bevorzugten Fällen wird der Cokatalysator in einer äquivalenten Menge zu dem Katalysatorgemisch in die Reaktionsmischung zugegeben.

Die Reaktion wird in der Schmelze bei Temperaturen im Bereich von 200 bis 400 °C, vorzugsweise von 230 bis 360 °C durchgeführt.

Üblicherweise wird unter Inertgas bei Normaldruck gearbeitet. Es kann jedoch auch bei Über- bzw. Unterdruck gearbeitet werden.

Zur Erhöhung des Molekulargewichtes können die aromatischen Polyamide einer Festphasennachkondensation in einer Inertgasatmosphäre unterzogen werden.

Die Polyamide können auf üblichen Maschinen durch Spritzguß oder Extrusion zu Formmassen verarbeitet werden.

Die Formmassen können zusätzlich noch Füllstoffe, wie Talkum, oder Verstärkungsmittel, wie Glas-, ARAMID[R]- oder Kohlefasern, sowie andere übliche Zusätze, wie z. B. Pigmente oder Stabilisatoren, enthalten.

Die Formmassen werden nach üblichen Verfahren wie Spritzguß, Extrusion o. ä. zu Formteilen, Fasern, Folien usw. verarbeitet. Ebenso ist die Verwendung als Beschichtungsmittel ausgehend vom Pulver (z. B. Wirbelsinterverfahren), einer flüssigen Dispersion oder einer Lösung möglich.

Nach dem erfindungsgemäßen Verfahrenhergestellte aromatische Polyamide weisen eine unerwartet hohe Temperaturstabilität auf. Eine Verarbeitung der Produkte kann noch bei Temperaturen > 340 °C erfolgen, ohne daß eine Abnahme des Molekulargewichtes oder eine Braunfärbung eintritt. Ferner zeigen erfindungsgemäß erhaltene Formmassen eine hervorragende Stabilität gegenüber Thermooxidation, so daß sie noch bei deutlich höheren Temperaturen als entsprechende Massen des Standes der Technik eingesetzt werden können. Zu diesen Eigenschaften hinzuzurechnen ist eine gute Wärmestandfestigkeit, d. h. Formmassen, welche die erfindungsgemäßen aromatischen Polyamide zur Basis haben, können über lange Zeiträume hohen Temperaturen ausgesetzt werden, ohne daß ein deutlicher Verlust bei den mechanischen Eigenschaften auftritt.

Die in der Beschreibung und in den Beispielen genannten Parameter wurden mit Hilfe nachstehender Verfahren bestimmt.

Der Glaspunkt ($T_g$) wurde unter Verwendung eines DSC bei einer Aufheizrate von 10 °C/min. bestimmt.

Die Viskositätszahlen (J) wurden an 0,5 % Gew.-%igen Lösungen der Polyamide in einem Phenol/o-Dichlorbenzol-Gemisch (1 : 1 Gewichtsteile) bei 25 °C nach DIN 53 728 bestimmt.

Die Wärmealterung der Prüfkörper wurde bei 200 °C in einem Umluftofen mit 10 % Frischluftzufuhr durchgeführt.

Mit Buchstaben gekennzeichnete Beispiele sind nicht erfindungsgemäß.-

## Beispiele

### Beispiel 1:

21,62 g (0,05 Mol) 4,4'-Bis(4-aminophenoxy)diphenylsulfon, 8,31 g (0,05 Mol) Isophthalsäure und 0,79 g (0,004 Mol) Benzanilid wurden mit 310 mg (0,001 Mol) Triphenylphosphit und 207 mg (0,001 Mol) Zinnoxalat in einem Polykondensationsreaktor mit Rührer, Stickstoffeinleitung und Destillationsbrücke bei 250 °C aufgeschmolzen. Die Temperatur wurde nach 20 Minuten auf 300 °C erhöht. Dabei nahm die Viskosität der Schmelze stetig zu, während das im Verlauf der Reaktion freiwerdende Wasser abdestilliert wurde. Nach 30 Minuten bei 300 °C wurde die Reaktion abgebrochen.Die Viskositätszahl (J) betrug 30 $cm^3/g$. Eine Festphasennachkondensation bei 250 °C und 0,5 mbar lieferte nach 24 h ein Polyamid mit J = 61 $cm^3/g$.

### Beispiel A:

21,62 g (0,05 Mol) 4,4'-Bis(4-aminophenoxy)diphenylsulfon und 8,31 g (0,05 Mol) Isophthalsäure wurden mit 109 μl (0,001 Mol) 50 %iger wässriger Hypophosphoriger Säure und 122 mg (0,001 Mol) 4-Dimethylaminopyridin analog Beispiel 1 umgesetzt. Die Viskositätszahl (J) des Polyamids betrug 35 $cm^3/g$. Die Festphasennachkondensation analog Beispiel 1 ergab ein Polyamid mit J = 75 $cm^3/g$.

### Beispiele 2 - 8:

Die Beispiele 2 - 8 wurden analog Beispiel 1 durchgeführt, jedoch wurden die Katalysatoren gemäß nachstehender Tabelle variiert:

### Wärmealterung

Die in den Beispielen 1 bis 8 und A hergestellten Polyamide wurden bei 310 °C und einem Druck von 100 bar zu Platten von 1 mm Dicke verpreßt und in einem Umluftofen 24 h gealtert. Das nach DE-OS 36 09 011 im Vergleichsbeispiel hergestellte Polyamid war dunkelbraun verfärbt, während die nach den Beispielen 1 bis 8 hergestellten Polyamide praktisch keine Veränderungen aufwiesen.

Tabelle

| Beispiel | Katalysator | | | | Cokatalysator | | J | J*) |
|---|---|---|---|---|---|---|---|---|
| | | [Mol.-%] | | [Mol.-%] | | [Mol.-%] | [$cm^3/g$] | [$cm^3/g$] |
| 2 | $H_3PO_2$ | 2.0 | Zinnoxalat | 2.0 | - | | 25 | 63 |
| 3 | $H_3PO_3$ | 4.0 | " | 4.0 | - | | 21 | 61 |
| 4 | $H_3PO_2$ | 2.0 | " | 4.0 | DMAP**) | 2.0 | 23 | 60 |
| 5 | $P(OPh)_3$ | 4.0 | Zinn(II)dilaurat | 3.0 | - | | 21 | 64 |
| 6 | $H_3PO_2$ | 2.0 | Zinn(II)dioctanoat | 4.0 | - | | 22 | 68 |
| 7 | - | | $Sn(II)HPO_3$ | 4.0 | - | | 24 | 68 |
| 8 | - | | ***) 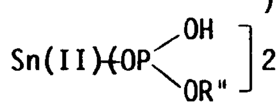 | 3.0 | - | | 31 | 64 |

*) gemessen nach Festphasennachkondensation

**) Dimethylaminopyridin

***) R" = 2-Ethylhexyl-Rest

**Patentansprüche**

1. Verfahren zur Herstellung eines thermoplastisch verarbeitbaren, aromatischen Polyamids durch Polykondensieren nachstehender Ausgangsmonomeren:
   A. HOOC - Ar - COOH
   B. $H_2N$ - Ar' - $NH_2$
   hierbei bedeutet
   Ar: 1.3-oder 1.4-Phenylen; 1.4-, 1.5-, 2.6- oder 2.7-Naphthylen,

   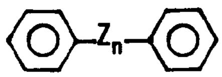

   oder

   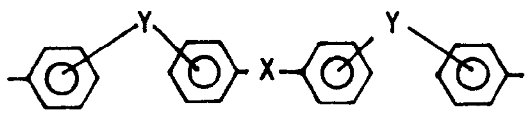

   ;

   Ar':

   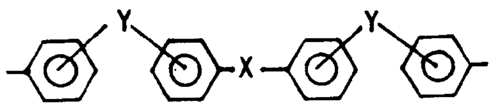

   ;

   X: $-SO_2-$; -CO-;
   Y: -O-; -S-;
   Z: -O-; -S-; $-SO_2-$; -CO-; $-CR_2-$;
   R: -H; $C_1$ - $C_4$-Alkyl;
   n: 0; 1;
   in der Schmelze in Gegenwart eines Katalysators bei Temperaturen im Bereich von 200 bis 400 °C
   dadurch gekennzeichnet,
   daß die Reaktion in Gegenwart von Phosphor- und Zinn(II)-Verbindungen als Katalysator stattfindet, wobei der Gehalt an Phosphor- und Zinn(II)-Verbindung 0,05 bis 4 Mol.-% beträgt und die Phosphorverbindung mindestens zu 0,025 Mol.-% und die Zinn(II)-Verbindung mindestens zu 0,025 Mol.-% - jeweils bezogen auf die Summe der Komponenten A. und B. - eingesetzt wird.

2. Verfahren nach Anspruch 1,
   dadurch gekennzeichnet,
   daß der Gehalt an Phosphor- und Zinn(II)-Verbindung jeweils 0,2 bis 2 Mol.-% beträgt.

3. Verfahren nach Anspruch 1 und 2,
   dadurch gekennzeichnet,
   daß als Phosphorverbindung Triphenylphosphit eingesetzt wird.

4. Verfahren nach Anspruch 1 und 2,
   dadurch gekennzeichnet,
   daß als Phosphorverbindung eine Säure der allgemeinen Formel $H_3PO_m$ mit m = 2 bis 4 eingesetzt wird.

5. Verfahren nach den Ansprüchen 1 bis 4,
   dadurch gekennzeichnet,
   daß als Zinn(II)-Verbindungen Salze von organischen Mono- und/oder Dicarbonsäuren mit 2 bis 16 C-Atomen im Kohlenstoffgerüst eingesetzt werden.

**6.** Verfahren nach Anspruch 1 und 2,
dadurch gekennzeichnet,
daß als Katalysator Zinn(II)-Verbindungen einer Phosphor enthaltenden Säure der allgemeinen Formel $H_3PO_m$ mit m = 2 bis 4 eingesetzt werden.

**7.** Verfahren nach Anspruch 1 und 2,
dadurch gekennzeichnet,
daß als Katalysator Verbindungen mit der allgemeinen Formel

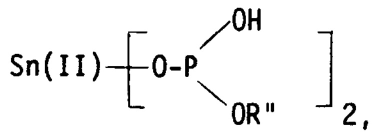

wobei R"
2-Ethylhexyl bedeutet, eingesetzt werden.

**8.** Formmassen auf der Basis der thermoplastisch verarbeitbaren, aromatischen Polyamide, hergestellt nach den Ansprüchen 1 bis 7.

## Claims

**1.** A process for the preparation of a thermoplastically processable, aromatic polyamide by polycondensing the following starting monomers:
A. HOOC - Ar - COOH
B. $H_2N$ - Ar' - $NH_2$
in which
Ar denotes 1,3- or 1,4-phenylene, 1,4-, 1,5-, 2,6- or 2,7-naphthalene,

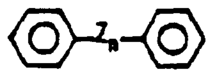

or

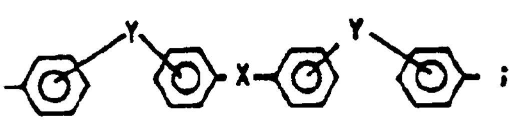

Ar' denotes

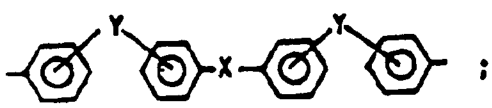

X denotes $-SO_2-$ or -CO-;
Y denotes -O- or -S-;
Z denotes -O-, -S-, $-SO_2-$, -CO- or $-CR_2-$;
R denotes -H or $C_1$-$C_4$-alkyl;
n denotes 0 or 1;
in the melt in the presence of a catalyst at a temperature in the range from 200 to 400°C, characterised in that the reaction is carried out in the presence of phosphorus or tin(II) compounds as catalyst, where the content of the phosphorus and tin(II) compounds is from 0.05 to 4 mol%, and at least 0.025 mol% of

the phosphorus compound and at least 0.025 mol% of the tin(II) compound are employed, in each case based on the total amount of components A. and B.

**2.** A process according to Claim 1, characterised in that the content of the phosphorus and tin(II) compound is in each case from 0.2 to 2 mol%.

**3.** A process according to either of Claims 1 and 2, characterised in that triphenyl phosphite is employed as phosphorus compound.

**4.** A process according to either of Claims 1 and 2, characterised in that an acid of the general formula $H_3PO_m$ where m = 2 to 4 is employed as phosphorus compound.

**5.** A process according to any of Claims 1 to 4, characterised in that salts of organic mono- and/or dicarboxylic acids having 2 to 16 carbon atoms in the carbon skeleton are employed as tin(II) compounds.

**6.** A process according to either of Claims 1 and 2, characterised in that tin(II) compounds of a phosphorus-containing acid of the general formula $H_3PO_m$ where m = 2 to 4 are employed as catalyst.

**7.** A process according to either of Claims 1 and 2, characterised in that compounds having to general formula

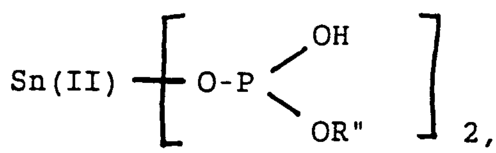

where R" is 2-ethylhexyl, are employed as catalyst.

**8.** Moulding compositions based on thermoplastically processable, aromatic polyamides prepared according to any of Claims 1 to 7.

## Revendications

**1.** Procédé de préparation d'une polyamide aromatique, façonnable par thermoplastie, par polycondensation des monomères de départ ci-après :

A. HOOC - Ar - COOH
B. $H_2N$ - Ar' - $NH_2$

dans lesquels les symboles ont la signification suivante :
Ar : 1,3- ou 1,4-phénylène ; 1,4-, 1,5-, 2,6- ou 2,7-naphtylène

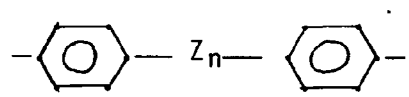

ou

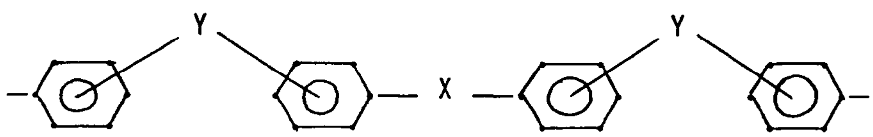

;

Ar' :

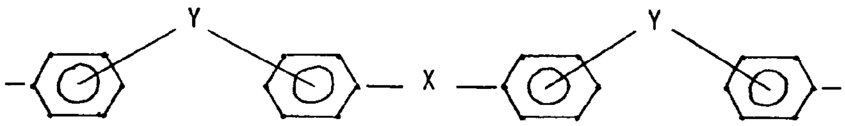 ;

X : $-SO_2-$ ; -CO- ;
Y : -O - ; -S- ;
Z : -O - ; -S- ; $-SO_2-$ ; -CO- ; $-CR_2$ ;
R : -H ; alkyle en $C_1$ à $C_4$ ;
n : zéro ; 1 ;
à l'état fondu en présence d'un catalyseur, à des températures comprises dans un domaine de 200 à 400°C, caractérisé par le fait que la réaction a lieu en présence de composés de phosphore et d'étain-(II) en tant que catalyseur, la teneur en composé de phosphore et d'étain-(II) étant de 0,05 à 4 mol.-% et le composé de phosphore étant au moins utilisé à raison de 0,025 mol.-% et le composé d'étain-(II) étant mis en oeuvre au moins à raison de 0,025 mol.-%, rapporté chaque fois à la somme des composants A et B.

2. Procédé selon la revendication 1, caractérisé par le fait que la teneur en composé de phos- phore et d'étain-(II) est chaque fois de 0,2 à 2 mol.-%.

3. Procédé selon les revendications 1 et 2, caractérisé par le fait que l'on utilise, comme composé de phosphore, le phosphite de triphényle.

4. Procédé selon les revendications 1 et 2, caractérisé par le fait que l'on utilise, comme composé du phosphore, un acide de la formule générale $H_3PO_m$, dans laquelle m a une valeur de 2 à 4.

5. Procédé selon les revendications 1 à 4, caractérisé par le fait que l'on utilise, comme composés d'étain-(II), des sels d'acides mono- et/ou di-carboxyliques organiques comportant de 2 à 16 atomes de carbone.

6. Procédé selon les revendications 1 et 2, caractérisé par le fait que l'on utilise, comme catalyseur, des composés d'étain-(II) d'un acide renfermant du phosphore et répondant à la formule générale $H_3PO_m$, dans laquelle m a une valeur de 2 à 4.

7. Procédé selon les revendications 1 et 2, caractérisé par le fait que l'on utilise, comme catalyseur, des composés de la formule générale

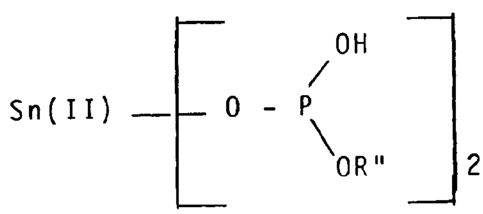 ,

R" représentant un radical 2-éthyl-hexyle.

8. Les masses à mouler à base des polyamides aromatiques, façonnables par thermoplastie, qui sont préparées selon les revendications 1 à 7.